# EUROPEAN PATENT SPECIFICATION

(11) **EP 3 960 537 B1**
(45) Date of publication and mention of the grant of the patent: **19.06.2024**
(21) Application number: 21306164.1
(22) Date of filing: 30.08.2021
(51) Int. Cl.: B60N 5/00, G08G 1/16

(54) **PUBLIC TRANSPORT ROAD VEHICLE COMPRISING A DOOR CONTROL SYSTEM**
ÖFFENTLICHES VERKEHRSMITTEL MIT EINEM TÜRSTEUERUNGSSYSTEM
VÉHICULE ROUTIER DE TRANSPORT PUBLIC COMPRENANT UN SYSTÈME DE COMMANDE DE PORTE

(30) Priority: 31.08.2020 IT 202000020671
(43) Date of publication of application: 02.03.2022
(73) Proprietor: IVECO FRANCE S.A.S., 69200 Vénissieux (FR)
(72) Inventor: CODRON, Stephane, 69008 Lyon (FR)
(74) Representative: Studio Torta S.p.A.

(56) References cited:
- CN-A- 111 497 742
- DE-A1-102019 123 635
- JP-A- 2020 093 567
- KR-A- 20150 120 125
- KR-A- 20160 036 755
- KR-A- 20180 060 937
- KR-A- 20190 004 123
- KR-A- 20190 044 727

## Description

### TECHNICAL FIELD

This invention relates to a control system for a public transport road vehicle, in particular a door control system for a public transport road vehicle, such as a bus or a coach.

### PRIOR ART

Public transport road vehicles, such as buses or coaches, comprise a number of doors configured to allow passengers to enter or exit the vehicle.

It is normal for passengers to be able to step in front of or behind the stationary vehicle at a bus stop, to cross the road, when exiting the front or back doors. This practice is most common in public places such as schools or other places with a lot of traffic.

However, this practice is extremely dangerous as passengers passing in front or behind the vehicle do not have a clear view of the road. Consequently, if another road vehicle overtakes the stationary vehicle, it is clear that the risk of potentially fatal accidents is high.

The drivers of these public transport road vehicles have no means of preventing this practice of passengers and the risk of an accident therefore remains high.

It is, therefore, necessary to increase the safety of passengers when they descend from a public transport vehicle.

There are known systems that delay the opening of a vehicle's doors. Examples of such systems are illustrated in KR20190044727 A, JP2020093567 A, DE102019123635A1, or CN111497742A. Document KR 2019 0044727 discloses a road vehicle for the public transport of passengers according to the preamble of claim 1. However, such systems, by simply delaying the opening of a door, do not provide the sufficient safety required in public transport vehicles, as discussed above.

Other documents that relates to doors opening in a public transport vehicle are KR20150120125 A, KR20180060937 A, KR20190004123 A, KR20160036755A.

The invention aims to solve the drawbacks mentioned above in an economical and improved way.

### SUMMARY OF THE INVENTION

The above-mentioned drawbacks can be overcome with a vehicle according to claim 1 and a method according to claim 7.

Preferred embodiments of the invention are produced according to the dependent claims or the claims related to the above-mentioned independent claims.

### BRIEF DESCRIPTION OF THE DRAWINGS

Additional characteristics and advantages of the invention will clearly emerge from the description that follows, by way of a non-limiting example only, with reference to the attached drawings, wherein:
- Figure 1 is a perspective view that illustrates a public transport road vehicle comprising a door control system according to the invention;
- Figure 2 is a perspective view that illustrates a back portion of the vehicle in Figure 1;

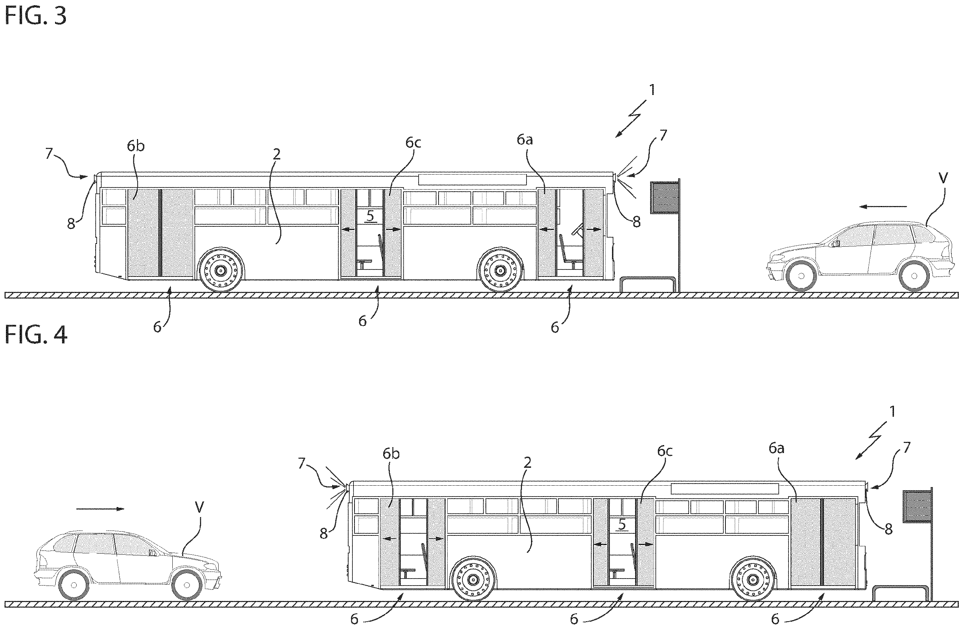

- Figure 3 is a side view of the vehicle in Figure 1 in a first operating condition; and
- Figure 4 is a side view of the vehicle in Figure 1 in a second operating condition.

### DETAILED DESCRIPTION OF THE INVENTION

For greater clarity but in a non-limiting way, the following description refers to a bus; the description that follows may be applied to other types of road vehicles.

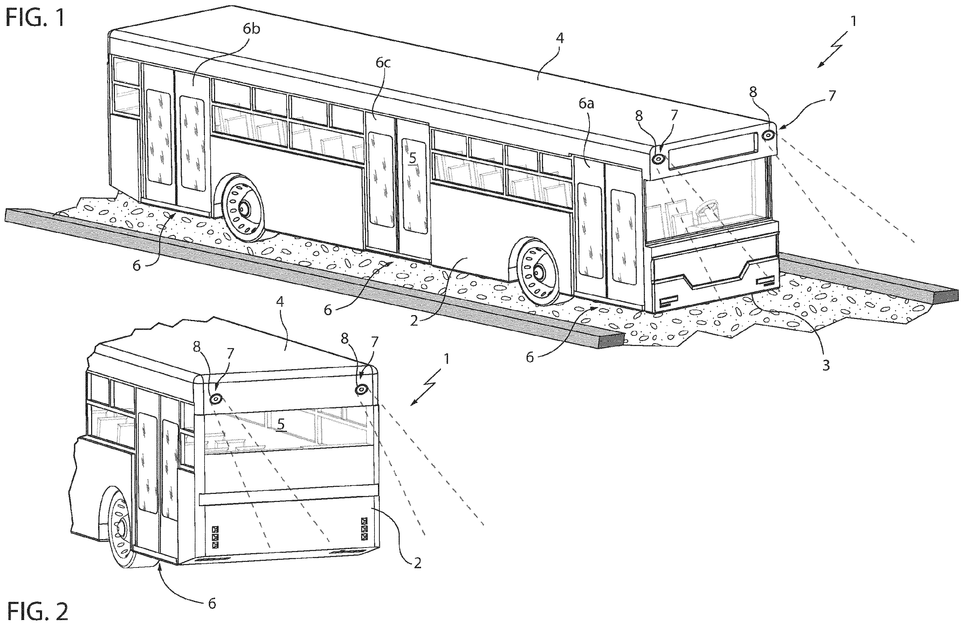

Figure 1 illustrates a bus 1 of a known type comprising a number of walls 2, a floor 3, and a roof 4 configured to delimit an interior space 5 of the bus 1 designed to transport passengers and accessible via doors 6 made in at least one of the walls 2.

The vehicle 1 essentially comprises a front door 6a and a back door 6b configured to enable access to the respective front and back portions of the interior space 5, i.e. the portions close to the front and back walls 2 of the vehicle 1, respectively.

According to the example described, the vehicle 1 also comprises an intermediate door 6c positioned longitudinally between the front door 6a and the back door 6b and configured to enable passengers to access a central zone of the interior space 5 or to descend from this.

The doors 6 may be of any type and are actioned using respective actuator means, for example electromechanical, electric, or hydraulic ones that are not illustrated.

The vehicle 1 also comprises sensor means 7 configured to detect the presence of other vehicles V that move along the direction of the vehicle 1. Said sensor means 7 are advantageously configured to define the size, speed, and distance of this detected vehicle V.

These sensor means 7 preferably comprise image sensor means, such as a video camera 8. More preferably, the vehicle 1 comprises a pair of video cameras 8 mounted on each of the front and back walls 2 of the vehicle 1 to the right and to the left in relation to a longitudinal axis of the vehicle 1. Advantageously, these video cameras 8 are mounted on the respective wall 2 in an elevated position, i.e. near an upper edge of the wall 2.

According to what has been said above, the vehicle 1 comprises front and back sensor means 7, which are configured to detect, respectively:
- a vehicle V in the same lane as the vehicle 1 and that is overtaking it; or
- a vehicle V in the opposite lane to the vehicle 1 and that is passing to its side.

According to the invention, the vehicle 1 comprises a door control system 6 configured to control the opening of the front and back doors 6a, 6b depending on the data detected by the sensor means 7.

Thus, this control system comprises an electronic unit (not illustrated) and electrically connected to the sensor means 7 and to the actuator means of the doors 6a, 6b and configured to control the activation of the actuator means depending on the processing of the data acquired by the sensor means 7.

According to the invention, if the sensor means 7 detect a vehicle V that is approaching the vehicle 1 from the front, the electronic unit will control the doors 6 so that the back door 6b opens in a delayed fashion in relation to the front door 6a, while when the sensor means 7 detect a vehicle V that is approaching the vehicle 1 from the back, the electronic unit will control the doors 6 so that the front door 6a opens in a delayed fashion in relation to the back door 6b.

Advantageously, the electronic unit is the vehicle 1 ECU.

Optionally, the vehicle 1 can also comprise signalling means (not illustrated) connected to the electronic unit and configured to signal to passengers the presence of the vehicle V detected and/or of the delayed opening of the door. For example, the signalling means may comprise acoustic or light means.

The operation of a vehicle 1 comprising a control system for opening the doors 6 according to the invention is as follows.

According to the embodiment described here, the vehicle 1 is stationary at a bus stop and the driver controls the activation of the opening of the doors 6 to allow passengers to get off the vehicle 1. When the signal is given, the electronic unit receives the data from the front and back sensor means 7. If the sensor means 7 detect a vehicle V, then its shape, distance, and speed are processed using the electronic unit.

Depending on the speed and direction from which the vehicle V arrives, the electronic unit controls the actuator means so that one of the doors 6a, 6b opens in a delayed fashion compared to the other doors 6c, 6b, 6a. In an extreme case, and where present, only the intermediate door opens before both the other two doors 6a, 6b at either end.

The length of the opening delay may be a predetermined value stored in the electronic unit or it can be assessed by the electronic unit depending on the dynamic features and shape of the vehicle V that is approaching the vehicle 1.

Optionally, if there are more vehicles V that follow each other and are approaching the vehicle 1, the electronic unit may temporarily prevent the opening of at least one of the doors 6a, 6b, waiting for a sufficiently safe situation around the vehicle 1.

According to what has been said above, the invention also relates to a method for controlling the opening of the doors of a public transport road vehicle comprising at least one front door 6a and one back door 6b and comprising the following steps:
- receiving an opening signal of the doors 6a, 6b;
- detecting the presence of a vehicle V approaching the vehicle 1;
- determining whether the vehicle V is dangerous for passengers who may cross the road next to the vehicle 1;
- thus controlling the opening of the doors 6a, 6b in such a way that the door opposite the direction of approach of the vehicle V is opened later than the other door.

In particular, as mentioned, the length of the delay is a predetermined time stored in an electronic control unit or a time processed depending on the data relating to the detected vehicle V.

Optionally, the method may also comprise the activation of signalling means to signal to passengers the presence of the vehicle V detected and/or of the delayed opening of the door 6a, 6b.

From the above, the advantages of a vehicle 1 comprising a control system for opening the doors 6 according to this invention are clearly evident.

Due to the delayed opening of the doors 6a, 6b, the passengers of the vehicle 1 are obliged to exit from a door further from the vehicle V that is approaching.

This "loss" of time significantly increases the safety of the passengers who are prevented from passing in front of or behind the vehicle 1 as the vehicle V passes.

If the delay is calculated in real time, as a function of the vehicle V, this safety is additionally increased.

In addition, the signalling means increase the awareness of the passengers to the presence of a dangerous element outside of the vehicle 1.

Finally, it is clear that the vehicle comprising a control system according to this invention may be subject to modifications, and variations may be created thereof, that, in any case, do not depart from the scope of protection defined by the claims.

For example, the actuator means, the sensor means, and the signalling means may be of any kind.

In addition, it is clear that the invention may be applied to a vehicle comprising a number of doors other than that illustrated.

## Claims

1. A road vehicle (1) for the public transport of passengers, said vehicle (1) comprising a plurality of walls (2, 3, 4) defining an interior space (5) accessible to passengers through at least two doors (6a, 6b),
said vehicle (1) comprising sensor means (7) carried by one of the walls (2) of said vehicle (1) and configured to acquire data relating to the presence of a road vehicle (V) approaching said vehicle (1),
the opening or closing of said doors (6a, 6b) being controlled by actuator means,.
**characterized in that** said vehicle (1) comprising a system for controlling said actuator means of said doors (6), said control system being configured to delay the opening of at least one of the doors (6a, 6b) as a function of the data acquired by said sensor means (7),
wherein said door opening control system comprises an electronic unit electrically connected to said actuator means and to said sensor means (7), said electronic unit comprising processing means configured to control said actuator means for delaying the opening of at least one of said doors (6a, 6b) as a function of the data acquired by the sensor means (7),
wherein said opening delay is a time pre-set and stored in said electronic unit or a time processed according to the dynamic conditions and the type of vehicle (V) detected.

2. The road vehicle according to claim 1, wherein said sensor means (7) comprise at least one image acquisition means (8).

3. The road vehicle according to claim 1 or 2, or said sensor means (7) are carried by a front wall and a rear wall of said vehicle (1).

4. The road vehicle according to one of claims 1 to 3, wherein said sensor means (7) are carried near an upper edge of said wall (2).

5. The road vehicle according to any of the preceding claims, wherein if the vehicle (V) detected is heading towards the front of said vehicle (1), the opening of the rear door (6b) is delayed while if the vehicle (V) detected is heading towards the rear of said vehicle (1), the opening of the front door (6a) is delayed.

6. A road vehicle according to one of the preceding claims, comprising signalling means configured to signal passengers of the delayed opening of a door and the presence of said vehicle (1).

7. Method of controlling the opening of the doors of a road vehicle according to any of the preceding claims, said method comprising the following phases:
- receiving an opening signal from said doors (6a, 6b);
- detecting the presence of a vehicle (V) approaching said vehicle (1);
- determining whether said vehicle (V) is dangerous for passengers who may cross the road next to said vehicle (1);
- thus controlling the opening of the doors (6a, 6b) in such a way that the door opposite to the direction of approach of said vehicle (V) is opened later than the other door,
wherein the value of said delay is a pre-set time stored in an electronic control unit or the value of said delay is a time processed as a function of data relating to the vehicle (V) detected.

8. The method according to claim 7, comprising the phase of signalling to passengers the delayed opening of the doors (6a, 6b) and/or the presence of said vehicle (V).

## Patentansprüche

1. Straßenfahrzeug (1) für den öffentlichen Transport von Passagieren, welches Fahrzeug (1) eine Mehrzahl von Wänden (2,3,4) umfasst, die einen Innenraum (5) begrenzen, der für Passagiere durch zumindest zwei Türen (6a, 6b) zugänglich ist,
welches Fahrzeug (1) Sensormittel (7) umfasst, die von einer der Wände (2) des Fahrzeugs (1) getragen werden und dazu ausgebildet sind, Daten bezüglich der Anwesenheit eines Straßenfahrzeugs (V) zu erfassen, das sich dem Fahrzeug (1) nähert,
wobei das Öffnen und Schließen der Türen (6a, 6b) durch Betätigungsmittel gesteuert wird,
**dadurch gekennzeichnet, dass** das Fahrzeug (1) ein System zur Steuerung der Betätigungsmittel der Türen (6) umfasst, welches Steuerungssystem dazu ausgebildet ist, das Öffnen von zumindest einer der Türen (6a, 6b) als eine Funktion der von den Sensormitteln (7) erfassten Daten zu verzögern,
wobei das Türöffnungssteuerungssystem eine elektronische Einheit umfasst, die elektrisch mit den Betätigungsmitteln und den Sensormitteln (7) verbunden ist, welche elektronische Einheit Verarbeitungsmittel umfasst, ausgebildet zur Steuerung der Betätigungsmittel zur Verzögerung des Öffnens zumindest einer der Türen (6a,6b) als eine Funktion der von den Sensormitteln (7) erfassten Daten,
wobei die Öffnungsverzögerung eine vorbestimmte Zeit ist und in der elektronischen Einheit gespeichert ist oder eine Zeit, die entsprechend der dynamischen Zustände und des Typs des detektierten Fahrzeugs (V) berechnet wird.

2. Straßenfahrzeug gemäß Anspruch 1, bei welchem die Sensormittel (7) zumindest ein Bildaufnahmemittel (8) umfassen.

3. Straßenfahrzeug gemäß Anspruch 1 oder 2, oder Sensormittel (7) von einer Frontwand und einer Rückwand des Fahrzeugs getragen werden.

4. Straßenfahrzeug gemäß einem der Ansprüche 1 bis 3, bei welchem die Sensormittel (7) in der Nähe einer Oberkante der Wand (2) angebracht sind.

5. Straßenfahrzeug gemäß einem der vorhergehenden Ansprüche, bei welchem, wenn das detektierte Fahrzeug (V) sich auf das Fahrzeug (1) zu bewegt, das Öffnen der hinteren Tür (6b) verzögert wird, während, wenn das Fahrzeug (V) auf das Heck des Fahrzeugs (1) zu bewegt, das Öffnen der vorderen Tür (6a) verzögert wird.

6. Straßenfahrzeug gemäß einem der vorhergehenden Ansprüche, umfassend Signalmittel, ausgebildet, um Passagieren das verzögerte Öffnen einer Tür und die Anwesenheit des Fahrzeugs (1) zu signalisieren.

7. Verfahren zur Steuerung des Öffnens der Türen eines Straßenfahrzeugs gemäß einem der vorhergehenden Ansprüche, welches Verfahren die folgenden Phasen umfasst:
- Empfang eines Öffnungssignals von den Türen (6a, 6b);
- Detektieren der Anwesenheit eines Fahrzeugs (V), welches sich dem Fahrzeug (1) nähert,
- Bestimmen, ob das Fahrzeug (V) für Passagiere gefährlich ist, welche die Straße neben dem Fahrzeug (1) überqueren können;
- somit Steuern des Öffnens der Türen (6a, 6b) derart, dass die Tür gegenüber der Näherungsrichtung des Fahrzeugs (V) später geöffnet wird als die andere Tür,
wobei der Wert der Verzögerung eine vorbestimmte Zeit ist, die in einer elektronischen Steuereinheit gespeichert ist, oder der Wert der Verzögerung eine Zeit ist, die als eine Funktion von Daten berechnet wird, die sich auf das detektierte Fahrzeug (V) beziehen.

8. Verfahren gemäß Anspruch 7, umfassend die Phase, in der den Passagieren das verzögerte Öffnen der Türen (6a, 6b) und/oder die Anwesenheit des Fahrzeugs (V) signalisiert wird.

## Revendications

1. Véhicule (1) routier pour le transport en commun de passagers, ledit véhicule (1) comprenant une pluralité de parois (2, 3, 4) définissant un espace intérieur (5) accessible par les passagers à travers au moins deux portes (6a, 6b),
ledit véhicule (1) comprenant des moyens de capteur (7) portés par l'une des parois (2) dudit véhicule (1) et configurés pour acquérir des données relatives à la présence d'un véhicule routier (V) s'approchant dudit véhicule (1),
l'ouverture ou la fermeture desdites portes (6a, 6b) étant contrôlée par des moyens d'actionneur,
**caractérisé en ce que** ledit véhicule (1) comprend un système pour contrôler lesdits moyens d'actionneur desdites portes (6), ledit système de contrôle étant configuré pour retarder l'ouverture d'au moins une des portes (6a, 6b) en fonction des données acquises par lesdits moyens de capteur (7),
dans lequel ledit système de contrôle d'ouverture comprend une unité électronique raccordée, par voie électronique, auxdits moyens d'actionneur et auxdits moyens de capteur (7), ladite unité électronique comprenant des moyens de traitement configurés pour contrôler lesdits moyens d'actionneur pour retarder l'ouverture d'au moins une desdites portes (6a, 6b) en fonction des données acquises par les moyens de capteur (7),
dans lequel ledit retard d'ouverture est un temps préfixé et mémorisé dans ladite unité électronique ou un temps traité selon les conditions dynamiques et le type de véhicule (V) détecté.

2. Véhicule routier selon la revendication 1, dans lequel lesdits moyens de capteur (7) comprennent au moins un moyen d'acquisition d'images (8).

3. Véhicule routier selon la revendication 1 ou 2, ou lesdits moyens de capteur (7) sont portés par une paroi avant et une paroi arrière dudit véhicule (1).

4. Véhicule routier selon l'une des revendications 1 à 3, dans lequel lesdits moyens de capteur (7) sont portés à proximité d'un bord supérieur de ladite paroi (2) .

5. Véhicule routier selon l'une quelconque des revendications précédentes, dans lequel si le véhicule (V) détecté se dirige vers l'avant dudit véhicule (1), l'ouverture de la porte arrière (6b) est retardée, tandis que si le véhicule (V) détecté se dirige vers l'arrière dudit véhicule (1), l'ouverture de la porte avant (6a) est retardée.

6. Véhicule routier selon l'une des revendications précédentes, comprenant des moyens de signalisation configurés pour signaler aux passagers l'ouverture retardée d'une porte et la présence dudit véhicule (1).

7. Procédé pour contrôler l'ouverture des portes d'un véhicule routier selon l'une quelconque des revendications précédentes, ledit procédé comprenant les étapes suivantes :
recevoir un signal d'ouverture desdites portes (6a, 6b) ;
détecter la présence d'un véhicule (V) s'approchant dudit véhicule (1) ;
déterminer si ledit véhicule (V) est dangereux pour les passagers qui peuvent traverser la route à côté dudit véhicule (1) ;
contrôler par conséquent l'ouverture des portes (6a, 6b) d'une façon que la porte opposée à la direction d'approche dudit véhicule (V) est ouverte en retard par rapport à l'autre porte,
dans lequel la valeur dudit retard est un temps préfixé mémorisé dans une unité électronique de contrôle ou la valeur dudit retard est un temps traité en fonction des données relatives au véhicule (V) détecté.

8. Procédé selon la revendication 7, comprenant l'étape consistant à signaler aux passagers l'ouverture retardée des portes (6a, 6b) et/ou la présence dudit véhicule (V).
